(19)

**Europäisches Patentamt**
**European Patent Office**
**Office européen des brevets**

(11)　**EP 4 583 540 A1**

(12)　**EUROPEAN PATENT APPLICATION**

(43) Date of publication:
**09.07.2025　Bulletin 2025/28**

(21) Application number: **25150067.4**

(22) Date of filing: **02.01.2025**

(51) International Patent Classification (IPC):
**H04S 7/00** *(2006.01)*　　**G06F 3/0346** *(2013.01)*
**G06T 17/20** *(2006.01)*

(52) Cooperative Patent Classification (CPC):
**H04S 7/303;** G06F 3/0346; H04S 2420/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.01.2024　US 202463617136 P
30.12.2024　US 202419005619**

(71) Applicant: **Harman International Industries, Inc.
Stamford, Connecticut 06901 (US)**

(72) Inventor: **FERNANDEZ FRANCO, Alfredo
Stamford, CT 06901 (US)**

(74) Representative: **Kraus & Lederer PartGmbB
Thomas-Wimmer-Ring 15
80539 München (DE)**

(54)　**MULTIDIMENSIONAL ACOUSTIC CROSSTALK CANCELLATION FILTER INTERPOLATION**

(57)　Various embodiments disclose a computer-implemented method comprising determining a position and an orientation of a user in an environment, determining, based on the position and the orientation of the user, a subset of nearest points in a dimensional map, each point is associated with a corresponding transfer function, determining, based on the distance between each point in the subset of nearest points to the position and the orientation of the user in the dimensional map, a respective weight for each transfer function associated with the subset of nearest points, determining at least one crosstalk cancellation filter by combining each of the transfer functions associated with the subset of nearest points based on the respective weights, generating a plurality of audio signals for a plurality of loudspeakers based on the at least one crosstalk cancelation filter, and transmitting the plurality of audio signals to the plurality of loudspeakers for output.

500

502　Determine position and orientation of user in an environment

504　Identify a subset of points in dimensional map based on the position and orientation of user

506　Combine the transfer functions associated with the subset of points

508　Configure crosstalk cancellation filters based on combined transfer functions

510　Generate audio signals for playback based on crosstalk cancellation filters

512　Output audio signals to loudspeakers

**FIG. 5**

**EP 4 583 540 A1**

**Description**

**BACKGROUND**

**Field of the Various Embodiments**

Embodiments of the present disclosure relate generally to audio reproduction and, more specifically, to multi-dimensional acoustic crosstalk cancellation filter interpolation.

**Description of the Related Art**

Audio processing systems use one or more speakers to produce sound in a given space. The one or more speakers generate a sound field, where a user in the environment receives the sound included in the sound field. The one or more speakers reproduce sound based on an input signal that typically includes at least two channels, such as a left channel and a right channel. The left channel is intended to be received by the left ear of a user, and the right channel is intended to be received by the right ear of the user. Binaural rendering algorithms for producing sound using one or more speakers rely on crosstalk cancellation algorithms to ensure that the signals intended for the left ear are received by the left ear without interference from the other signals intended for the right ear, and vice versa. To do so, conventional crosstalk cancellation algorithms attempt to filter out interfering signals by characterizing the transmission paths of audio from speakers to the entrance of the ear canals of users based on measurements taken of the user at a specific location.

At least one drawback with conventional crosstalk cancelation techniques is that conventional techniques are highly focused to work at a specific point in three-dimensional space and break down if the user moves or rotates his or her head. Other conventional techniques attempt to compensate for potential lateral displacement of the head in one or two directions. However, conventional crosstalk cancellation techniques have trouble with realistic movement of a head in three-dimensional space, which results in six-degrees of freedom (e.g., movement along x, y, and z axes also referred to as forward/backward, left/right, up/down, and rotations along x, y, and axes also referred to as pitch, yaw, and roll). For example, when a user moves in multiple directions, conventional crosstalk cancellation techniques can degrade in effectiveness or in some circumstances cause increased interference. Additionally, the computational resources necessary to cover each degree of freedom becomes exponentially higher with each added degree of freedom. Conventional crosstalk cancellation techniques do not have the requisite computing resources to cover all six-degrees of freedom. As a result, conventional techniques for reducing crosstalk when playing back audio in a three-dimensional space do not adequately handle the full range of movement of the user.

As the foregoing illustrates, what is needed in the art are more effective techniques for reducing crosstalk when producing sound received by a user in a three-dimensional space in an environment.

**SUMMARY**

Various embodiments disclose a computer-implemented method comprising determining a position and an orientation of a user in an environment, determining, based on the position and the orientation of the user, a subset of nearest points in a dimensional map, wherein the dimensional map includes a set of points in a multi-dimensional space, each point is associated with a corresponding transfer function, and points in the subset of nearest points are closer to the position and the orientation of the user in the dimensional map than other points in the dimensional map, determining, based on the distance between each point in the subset of nearest points to the position and the orientation of the user in the dimensional map, a respective weight for each transfer function associated with the subset of nearest points, determining at least one crosstalk cancellation filter by combining each of the transfer functions associated with the subset of nearest points based on the respective weights, generating a plurality of audio signals for a plurality of loudspeakers based on the at least one crosstalk cancelation filter; and transmitting the plurality of audio signals to the plurality of loudspeakers for output.

Further embodiments provide, among other things, one or more non-transitory computer-readable media and systems configured to implement the method set forth above.

At least one technical advantage of the disclosed techniques relative to the prior art is that, with the disclosed techniques, an audio processing system can create improved crosstalk cancellation filters by compensating for movement of a user in six-degrees of freedom in real-time. Additionally, spectral distortions caused by user movements are reduced with reduced computational costs. Additionally, the audio intended to be received by the user's left ear and right ear, respectively, more accurately represents the audio input that the audio processing and playback system outputs. These technical advantages provide one or more technological advancements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 is a schematic diagram illustrating an audio processing system according to one or more embodiments.

Figure 2 illustrates an example of how crosstalk is observed by a listener from an input signal that is produced by one or more speakers according to one or more embodiments.

Figure 3 illustrates an example of triangulation for use during crosstalk cancellation based upon an observed position and orientation of a listener within a three-dimensional space according to one or more embodiments.

Figure 4 illustrates an example of filters that perform crosstalk cancellation based upon an observed position and orientation of a listener within a three-dimensional space according to one or more embodiments.

Figure 5 illustrates a flow chart of method steps for combining transfer functions used to configure filters that perform crosstalk cancellation according to one or more embodiments.

## DETAILED DESCRIPTION

In the following description, numerous specific details are set forth to provide a more thorough understanding of the various embodiments. However, it will be apparent to one skilled in the art that the inventive concepts may be practiced without one or more of these specific details.

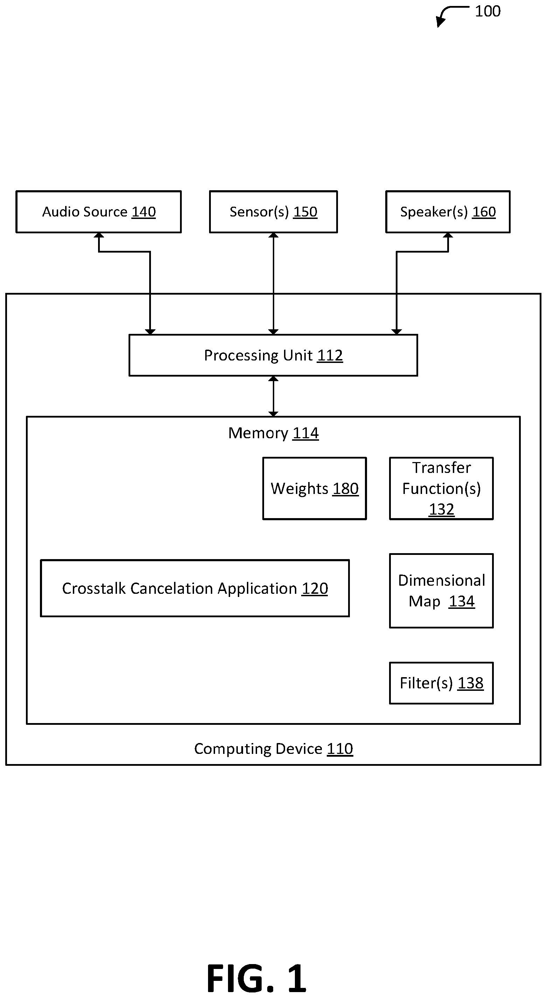

Figure 1 is a schematic diagram illustrating an audio processing system 100 according to various embodiments. As shown, the audio processing system 100 includes, without limitation, a computing device 110, an audio source 140, one or more sensors 150, and one or more speakers 160. The computing device 110 includes, without limitation, a processing unit 112 and memory 114. The memory 114 stores, without limitation, a crosstalk cancellation application 120, transfer functions 132, a dimensional map 134, and one or more filters 138.

In operation, the audio processing system 100 processes sensor data from the one or more sensors 150 to track the location of one or more listeners within the listening environment. The one or more sensors 150 track the position of the head of a listener in three-dimensional space as well as the pitch, yaw, and roll of the head, which is used to locate the relative location of the left ear and right ear, respectively, of the listener. Based upon the position and/or orientation of the head within a three-dimensional environment, the crosstalk cancellation application 120 selects one or more transfer functions 132 utilized for one or more filters 138 that are used to process the audio source 140 for playback by one or more speakers 160 associated with the audio processing system 100. Additionally, should the position of the head of the listener in a three-dimensional space change during playback of the audio source 140, crosstalk cancellation application 120 selects a different transfer functions 132 and potentially a different filter 138 that is used to process the audio source 140 for playback via one or more speakers 160.

The computing device 110 is a device that drives speakers 160 to generate, in part, a sound field for a listener by playing back an audio source 140. In various embodiments, the computing device 110 is an audio processing unit in a home theater system, a soundbar, a vehicle system, and so forth. In some embodiments, the computing device 110 is included in one or more devices, such as consumer products (e.g., portable speakers, gaming, etc. products), vehicles (e.g., the head unit of a car, truck, van, etc.), smart home devices (e.g., smart lighting systems, security systems, digital assistants, etc.), communications systems (e.g., conference call systems, video conferencing systems, speaker amplification systems, etc.), and so forth. In various embodiments, the computing device 110 is located in various environments including, without limitation, indoor environments (e.g., living room, conference room, conference hall, home office, etc.), and/or outdoor environments, (e.g., patio, rooftop, garden, etc.).

The processing unit 112 can be any suitable processor, such as a central processing unit (CPU), a graphics processing unit (GPU), an application-specific integrated circuit (ASIC), a field programmable gate array (FPGA), a digital signal processor (DSP), and/or any other type of processing unit, or a combination of processing units, such as a CPU configured to operate in conjunction with a GPU. In general, the processing unit 112 can be any technically feasible hardware unit capable of processing data and/or executing software applications.

Memory 114 can include a random-access memory (RAM) module, a flash memory unit, or any other type of memory unit or combination thereof. The processing unit 112 is configured to read data from and write data to the memory 114. In various embodiments, the memory 114 includes non-volatile memory, such as optical drives, magnetic drives, flash drives, or other storage. In some embodiments, separate data stores, such as an external data stores included in a network ("cloud storage") can supplement the memory 114. The crosstalk cancellation application 120 within the memory 114 can be executed by the processing unit 112 to implement the overall functionality of the computing device 110 and, thus, to coordinate the operation of the audio processing system 100 as a whole. In various embodiments, an interconnect bus (not shown) connects the processing unit 112, the memory 114, the speakers 160, the sensors 150, and any other components of the computing device 110.

The crosstalk cancellation application 120 determines the location of a listener within a listening environment and selects parameters for one or more filters 138, such as one or more transfer functions 132, to generate a sound field for the location of the listener. The transfer functions 132 are selected to minimize or eliminate crosstalk. The transfer functions 132 cause the filters 138 to produce audio in the sound field so that the left channel is perceived by the left ear of the listener with minimal crosstalk from the right channel. Similarly, the transfer functions 132 cause the filters 138 to produce audio in the sound field so that the right channel is perceived by the right ear of the listener with minimal crosstalk from the left channel. In various embodiments, the crosstalk cancellation application utilizes sensor data from sensors 150 to identify the position of the listener, and specifically the head of the listener. Based upon the position and orientation of the listener, crosstalk cancellation application 120 selects appropriate filters 138 and transfer functions 132 that are utilized to process the audio source 140 for playback. In some embodiments, the crosstalk cancellation application 120 sets the parameters for multiple filters 138 corresponding to multiple speakers 160. For example, a first transfer function 132 can be utilized for a first filter 138 that is utilized for audio played back by a first speaker 160, and a second transfer function 132 is utilized by a second filter 138 that is utilized for audio played back by a second speaker 160. In other embodiments, a filter network is utilized such that a signal used to drive each speaker 160 is passed through a network of multiple filters. Additionally or alternatively, the crosstalk cancellation application 120 tracks the positions and orientations of multiple listeners.

The filters 138 include one or more filters that modify an input audio source 140. In various embodiments, a given filter 138 modifies the input audio signal by modifying the energy within a specific frequency range, adding directivity information, and so forth. For example, the filter 138 can include filter parameters, such as a set of values that modify the operating characteristics (e.g., center frequency, gain, Q factor, cutoff frequencies, etc.) of the filter 138. In some embodiments, the filter parameters include one or more digital signal processing (DSP) coefficients that steer the generated soundwave in a specific direction. In such instances, the generated filtered audio signal is used to generate a soundwave in the direction specified in the filtered audio signal. For example, the one or more speakers 160 reproduce audio using one or more filtered audio signals to generate a sound field. In some embodiments, the crosstalk cancellation application 120 sets separate filter parameters, such as selecting a different transfer function 132 for separate filters 138 for different speakers 160. In such instances, one or more speakers 160 generate the sound field using the separate filters 138. For example, each filter 138 can generate a filtered audio signal for a single speaker 160 within the listening environment.

Transfer functions 132 include one or more transfer functions that are utilized to configure one or more filters 138 selected by crosstalk cancellation application 120 to process an input signal, such as a channel of the audio source 140, to produce an output signal used to driver a speaker 160. Different transfer functions 132 are utilized depending upon the position and orientation of a listener in a three-dimensional space.

In some embodiments, the dimensional map 134 maps a given position within a three-dimensional space, such as a vehicle interior, to filter parameters for one or more filters 138, such as one or more finite impulse response (FIR) filters. In various embodiments, the crosstalk cancellation application 120 determines a position and orientation of the listener based on data from sensors 150 and identifies transfer functions 132 or other filter parameters for filters 138 corresponding to each speaker 160. The crosstalk cancellation application 120 then updates the filter parameters for a specific speaker (e.g., a first filter 138(1) for a first speaker 160(1)) when the head of the listener moves. For example, the crosstalk cancellation application 120 can initially generate filter parameters for a set of filters 138. Upon determining that the head of listener has moved to a new position or orientation, the crosstalk cancellation application 120 then determines whether any of the speakers 160 require updates to the corresponding filters 138. The crosstalk cancellation application 120 updates the filter parameters for any filter 138 that requires updating. In some embodiments, crosstalk cancellation application 120 generates each of the filters 138 independently. For example, upon determining that a listener has moved, the crosstalk cancellation application 120 can update the filter parameters for a filter 138 (e.g., 138(1) for a specific speaker 160 (e.g., 160(1)). Alternatively, the crosstalk cancellation application 120 updates multiple filters 138.

The dimensional map 134 includes a plurality of points that represent a position and orientation in a three-dimensional space (e.g., points within a six-dimensional space identified by x, y, and z position coordinates and three roll, pitch, and yaw orientations). The dimensional map 134 maps position relative to a reference position in a given environment. The dimensional map 134 further maps orientation relative to a reference orientation in the environment. The dimensional map 134 can be generated by conducting acoustic measurements in the three-dimensional space for filter parameters, such as transfer functions 132, that minimize or eliminate crosstalk. The dimensional map 134 is then saved on the audio processing system 100 and used to configure filters 138 utilized by computing device 110 to minimize or eliminate crosstalk during playback of an audio source 140. In some embodiments, the dimensional map 134 includes specific coordinates relative to a reference point. For example, the dimensional map 134 can store the potential positions and orientations of the head of a listener as a distance and angle from a specific reference point. In some embodiments, the dimensional map 134 can include additional orientation information, such as pitch, yaw, and roll, that characterize the orientation of the head of the listener. Dimensional map 134 could also include as a set of angles (e.g., $\{\mu, \varphi, \psi\}$) relative to a normal orientation of the head of the listener. In such instances, a respective position and orientation defined by a point in dimensional map 134 is associated with one or more transfer functions 132 utilized for a filter 138. In one example, the dimensional map 134 is structured as a set of points, each of which is associated with a particular position and orientation in an environment. Each of the points is associated with one or more filters 138 and/or transfer functions 132 that can be utilized for each of the speakers 160 to reduce or eliminate crosstalk.

Crosstalk cancellation application 120 selects transfer functions 132 to configure filters 138, where the transfer functions 132 are identified by the dimensional map 134. The transfer functions 132 are used to configure filters 138 that process an audio source 140. Transfer functions 132 are identified based on a mathematical distance, such as a barycentric distance, of a set of points characterizing the position and orientation of listener's head to one or more of the points from the set of points in the dimensional map 134. In one example, a given position and orientation of a user is characterized by coordinates in six-dimensional space. In some embodiments, a nearest subset of points to the coordinates of the user is then identified within the dimensional map 134 using a graph search algorithm such as a Delaunay triangulation. Weights 180 for each transfer function 132 associated with the nearest subset of points are interpolated based on any technically feasible multi-dimensional distance calculation between the nearest subset of points and the coordinates of the user, such as a barycentric distance or Euclidean distance. Weights 180 are used in combination with the associated transfer functions 132 associated with the nearest subset of points in the dimensional map 134 to configure filters 138, which filter the audio signal that is played back.

As another example, a simplified approach to identifying transfer functions 132 includes reducing the number of dimensions of a position and orientation of the user that are considered when identifying a set of transfer functions specified by the dimensional map 134. As noted above, the dimensional map 134 includes a set of points in six-dimensional space to account for three parameters representing position and three parameters representing orientation. To reduce mathematical complexity, a reduced set of parameters representing the position and orientation of the user can be considered. For example, one or more of the parameters representing orientation can be removed and a nearest set of points are identified based on the mathematical distance from coordinates characterizing the position and orientation of the head of the user to one or more of the points from the set of points in the dimensional map 134. Examples of coordinates that can be removed include yaw, pitch, and/or roll angles. In one scenario, only the position of the head of the user and a yaw angle are considered, which reduces complexity to a consideration of four dimensions. As another example, only the position of the head of the user along with yaw and pitch angle are considered, which reduces complexity to five dimensions.

As another example, an alternative simplified approach to identifying transfer functions 132 includes reducing dimensionality of the dimensional map 134. As noted above, the dimensional map 134 includes a set of points in six-dimensional space to account for three parameters representing position and three parameters representing orientation. To reduce mathematical complexity, a dimensional map 134 that includes a set of points mapped in three, four, or five dimensional space can be generated and utilized. For example, the dimensional map 134 can map only the position of the head of the user in three-dimensional space and a yaw angle representing orientation, resulting in a four-dimensional map. As another example, the dimensional map 134 maps only the position of the head of the user and two parameters characterizing orientation, which reduces complexity of the dimensional map 134 to five dimensions.

As another example of a simplified approach to reducing dimensionality of the dimensional map 134, is to use multiple dimensional maps 134 that include three dimensions representing position in three-dimensional space can be utilized. Each of the three-dimensional maps are associated with a particular orientation parameter or a range of the orientation parameter. For example, each of the three-dimensional maps are associated with a yaw angle or a range of yaw angles. In one scenario, a first three-dimensional map is associated with a yaw angle of zero to ten degrees, a second three-dimensional map is associated with a yaw angle of greater than ten to twenty degrees, and so on. In this approach, based on a detected yaw angle of the head of the user, a three-dimensional map is selected. Then, based on coordinates based on the detected position of the user, the subset of points corresponding to nearest transfer functions 132 within the three-dimensional map are identified, weights of each transfer function are interpolated based on the barycentric distance or Euclidean distance to the detected position of the user, and the weighted transfer functions 132 are used to configure a filter 138.

The sensors 150 include various types of sensors that acquire data about the listening environment. For example, the computing device 110 can include auditory sensors to receive several types of sound (e.g., subsonic pulses, ultrasonic sounds, speech commands, etc.). In some embodiments, the sensors 150 includes other types of sensors. Other types of sensors include optical sensors, such as RGB cameras, time-of-flight cameras, infrared cameras, depth cameras, a quick response (QR) code tracking system, motion sensors, such as an accelerometer or an inertial measurement unit (IMU) (e.g., a three-axis accelerometer, gyroscopic sensor, and/or magnetometer), pressure sensors, and so forth. In addition, in some embodiments, sensor(s) 150 can include wireless sensors, including radio frequency (RF) sensors (e.g., sonar and radar), and/or wireless communications protocols, including Bluetooth, Bluetooth low energy (BLE), cellular protocols, and/or near-field communications (NFC). In various embodiments, the crosstalk cancellation application 120 uses the sensor data acquired by the sensors 150 to identify transfer functions 132 utilized for filters 138. For example, the computing device 110 includes one or more emitters that emit positioning signals, where the computing device 110 includes detectors that generate auditory data that includes the positioning signals. In some embodiments, the crosstalk cancellation application 120 combines multiple types of sensor data. For example, the crosstalk cancellation application 120 can combine auditory data and optical data (e.g., camera images or infrared data) in order to determine the position and orientation of the listener at a given time.

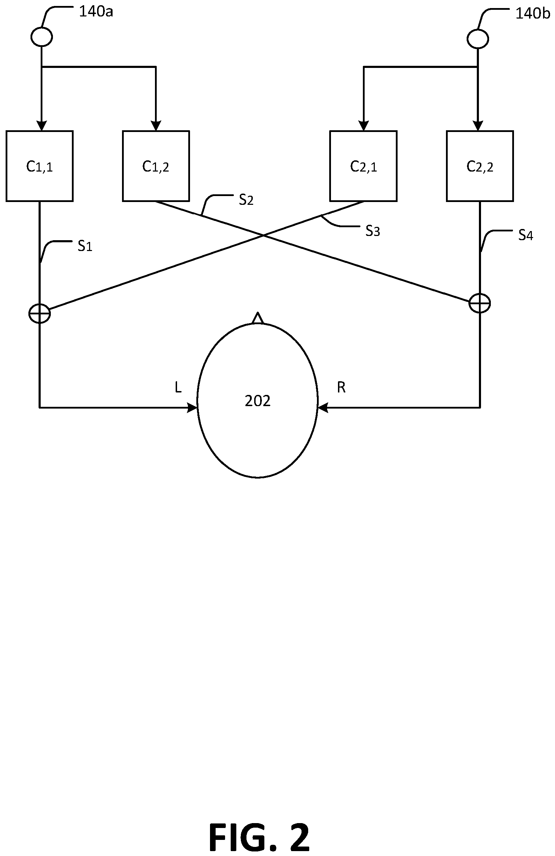

Figure 2 illustrates an example of how crosstalk is observed by a user from an input signal that is produced by one or more speakers 160. When an audio source 140 is played back by one or more speakers 160 crosstalk presents itself within audio that is measured at a left ear L and right ear R of a listener 202. Crosstalk naturally occurs when speakers are remotely located from a listener 202 absent crosstalk cancellation. Audio source 140a represents a desired signal at the left ear of the listener 202, or a left channel of the audio source 140. Audio source 140b represents a desired signal at the right ear of the listener 202, or a right channel of the audio source 140. When audio is played back in an environment, such as by speakers 160 that are remotely located from the ears of the listener 202, crosstalk occurs. $C_{1,1}$ and $C_{1,2}$ represent functions that characterize how the environment affects audio source 140a when played back by audio processing system 100. $S_1$ and $S_2$ represent respective portions of the audio source 140a that are heard by the left and right ears of the listener 202, respectively. For example, when audio source 140a is played by corresponding one or more speakers 160, the environment alters audio source 140a according to $C_{1,1}$ so that audio $S_1$ reaches the left ear of listener 202. Similarly, the environment alters audio source 140a according to C1,2 so that audio $S_2$ reaches the right ear of listener 202. $S_2$ represents a portion of audio source 140a that results in crosstalk that arrives at the right ear of the listener 202. $C_{2,1}$ and $C_{2,2}$ represent functions that characterize how the environment affects audio source 140b when played back by audio $S_3$ and $S_4$ represent respective portions of the audio source 140b that are heard by the left and right ears of the listener 202, respectively. For example, when audio source 140b is played by corresponding one or more speakers 160, the environment alters audio source 140b according to $C_{2,2}$ so that audio S4 reaches the right ear of listener 202. Similarly, the environment alters audio source 140b according to $C_{2,1}$ so that audio $S_3$ reaches the left ear of listener 202. $S_3$ represents a portion of audio source 140b that results in. Accordingly, embodiments of the disclosure utilize filters 138 that process signals that are then used to drive one or more speakers 160 to reduce or eliminate crosstalk caused by the environment.

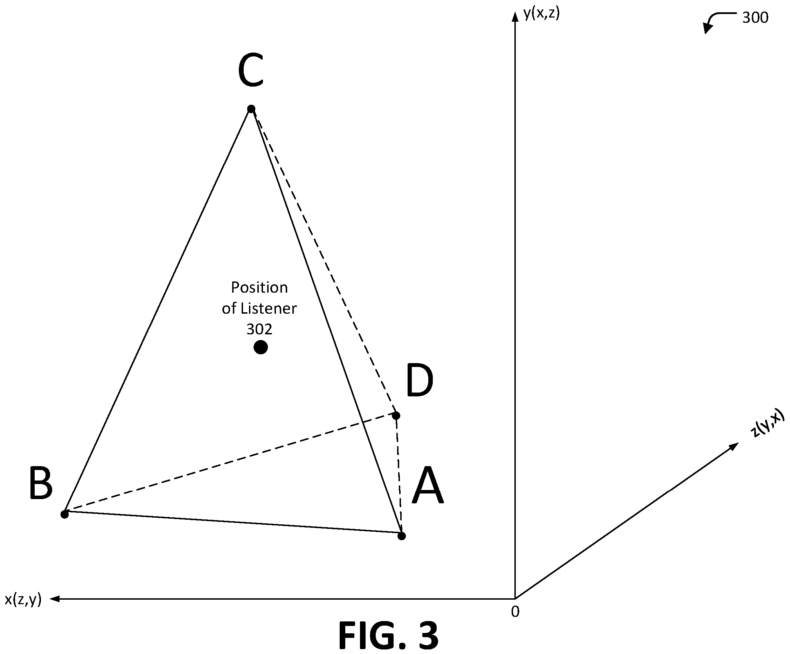

Figure 3 illustrates an example of triangulation for use during crosstalk cancellation based upon an observed position and orientation of a listener within a three-dimensional space according to various embodiments of the disclosure. As shown in Figure 3, a dimensional map 300 is shown in three dimensions (e.g., x, y, and z dimensions) that includes a set of points representing different transfer functions, such as transfer functions 132, that are effective at minimizing or eliminating crosstalk at a specific position and/or orientation in an environment. For illustrative purposes the depiction of dimensional map 300 in Figure 3 shows a portion of dimensional map 300 including only a subset of points, such as points A, B, C, D, and position of listener 302, in three dimensions, but is not meant to be limiting in any way. For example, dimensional map 300 can include a very large number (e.g., hundreds, thousands etc.) of points in six dimensions (e.g., three dimensions for position and three dimensions for orientation) or less. In some embodiments, the dimensional map 300 includes triangulations (e.g., a Delaunay triangulation) of various subsets of points into polygonal spaces, such that a circumscribed hypersphere of each polygonal space does not contain any other point in the dimensional map 300 and that each polygonal space is non-overlapping. For example, points A, B, C, and D form a tetrahedron where the other points (not shown) in dimensional map 300 are not within the interior of the tetrahedron. In some embodiments, the triangulated polygonal spaces can be made of five points, six points, seven points, or any other technically feasible number of points that form polygonal spaces. The portion of dimensional map 300 illustrated in Figure 3 shows a single tetrahedron connecting points A, B, C, and D, but the entirety of dimensional map 300 can include a large number (e.g., thousands, hundreds, etc.) of tetrahedrons, each non-overlapping with the other tetrahedrons. In some embodiments, the triangulated polygonal spaces can be calculated and stored in memory prior to the start of crosstalk cancelation. In some embodiments, two different three-dimensional maps can be utilized instead of a single dimensional map represented in four or more dimensions.

The crosstalk cancellation application 120 utilizes dimensional map 300 to identify transfer functions 132 or other filter parameters for filters 138 corresponding to each speaker 160 based on a position and/or orientation of the listener determined via sensors 150. For example, if the position and/or orientation of the listener matches the position and/or orientation of point A in dimensional map 300, then the crosstalk cancellation application 120 would identify or select the transfer function associated with point A for use as a filter parameter. If the position and/or orientation of the listener does not match the position and/or orientation of a single point in dimensional map 300, then crosstalk cancellation application 120 identifies a subset of the set of points in dimensional map 300 that is nearest to the position and/or orientation of the user. In some embodiments, the subset of nearest points can include four to six points of set the points in the dimensional map 300 that are nearest the position and/or orientation of the listener. For example, the nearest four points in dimensional map 300 to the position of listener 302 are points A, B, C, and D.

The crosstalk cancellation application 120 identifies the subset of points that are nearest to the position and/or orientation of the listener by determining the position and/or orientation of the listener falls within one of the previously calculated and stored tetrahedrons. For example, the position of listener 302 in Figure 3 is within the tetrahedron that is formed by points A, B, C, and D, thereby identifying points A, B, C, and D as the nearest subset of points to the position of listener 302. Because the position of the listener does not directly match a point associated with a single transfer function of transfer functions 132 in dimensional map 300, the crosstalk cancellation application 120 determines a weight 180 for each transfer function 132 associated with each respective point in the nearest subset of points. The weights 180 of each transfer function 132 are determined by the crosstalk cancellation application 120 based on a barycentric distance or Euclidean distance from the respective point in the nearest subset of points to the position of listener 302. For example, the weight 180 for each transfer function 132 associated with each point in the nearest subset of points can be equal to the inverse proportion of the distance to the position of the listener 302, normalized so that the sum of the weights of all the transfer functions 132 is 1.0. Therefore, the nearer the transfer function 132 is to the position of listener 302, the higher the weight 180 of the respective transfer function 132. The higher the weight 180, the more effect the respective transfer function 132 has on the operating characteristics (e.g., center frequency, gain, Q factor, cutoff frequencies, etc.) of the one or more filters 138. The crosstalk cancellation application 120 can store the weights 180 in memory in case the weights 180 need to be used again. For example, each time the position of the listener 302 moves, the weights need to be recalculated. However, if the position of the listener 302 moves back to the previous position, then the stored weights 180 associated with that position of the listener 302 can be used.

In the three-dimensional case where there are four points, such as points A, B, C, and D, the crosstalk cancellation application can determine a 2x2 matrix for transfer functions $C_{mxn}$, where m is the number of speakers 160 and n is the number of ears of the listener:

$$C^\gamma = \begin{bmatrix} C_{11}^\gamma & C_{12}^\gamma \\ C_{21}^\gamma & C_{22}^\gamma \end{bmatrix}; \text{ where } \gamma \in [A, B, C, D] \qquad \text{Equation 1}$$

The crosstalk cancellation application 120 inputs the weights 180 of points A, B, C, and D previously determined as w, such that:

$$w = [w_A, w_B, w_C, w_D] \qquad \text{Equation 2}$$

Using the weights w, the crosstalk cancellation application 120 can calculate the weighted sum for each transfer function in the 2x2 matrix, based on:

$$\hat{c}_{m,n} = c_{m,n}^A \times w_A + c_{m,n}^B \times w_B + c_{m,n}^C \times w_C + c_{m,n}^D \times w_D \qquad \text{Equation 3}$$

The result of the weighted sums are the transfer functions $C_{11}$, $C_{12}$, $C_{21}$, and $C_{22}$ shown in Figure 2.

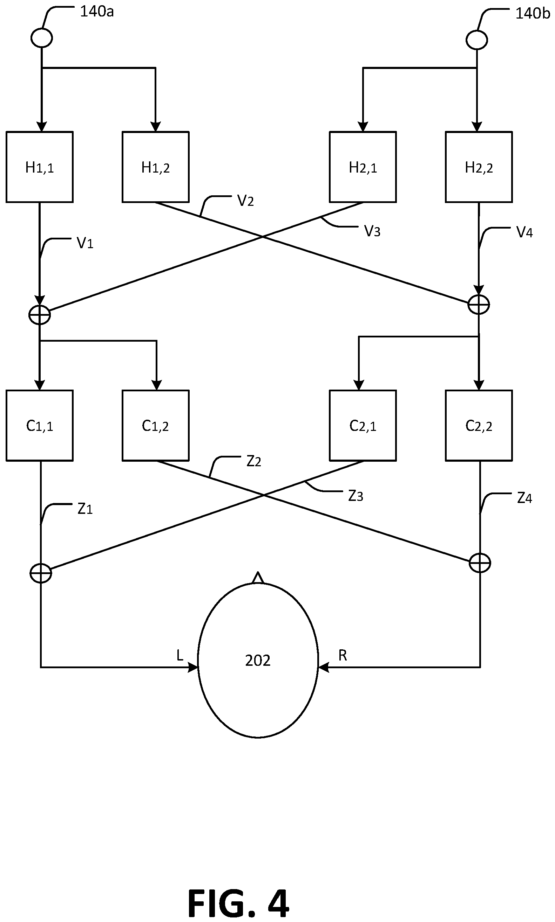

Figure 4 illustrates an example of filters 138 that perform crosstalk cancellation based upon an observed position and orientation of a user within a three-dimensional space according to various embodiments of the disclosure. As shown in Figure 4, the audio source 140a corresponding to a left channel of audio source 140, and audio source 140b, corresponding to the right channel of audio source 140, are played back by one or more speakers 160. As described above in connection with Figure 2, audio source 140a represents a desired signal at the left ear of the listener 202, or a left channel of the audio source 140. Audio source 140b represents a desired signal at the right ear of the listener 202, or a right channel of the audio source 140. Without filtering, when audio is played back in a three-dimensional environment, such as by speakers 160 that are remotely located from the ears of the listener 202, crosstalk can occur as described in Figure 2.

Crosstalk cancellation application 120 determines the position and orientation of the head of the listener 202 based on sensor data from sensors 150, such as one or more cameras or other devices that detect a position or orientation of the listener 202. Crosstalk cancellation application 120 further determines, based on a dimensional map 134, the distance of the parameters characterizing the position and orientation of head of the listener 202 to one or more points within the dimensional map 134, as further explained in Figure 3. In one example, crosstalk cancellation application 120 calculates a mathematical distance, such as a barycentric distance or a Euclidean distance, of the position and orientation of the head of the listener 202 from points within the dimensional map 134. The crosstalk cancellation application 120 then identifies transfer functions 132 associated with the nearest point according to the calculated barycentric or Euclidean distance.

The crosstalk cancellation application 120 selects transfer functions that are used to configure a set of filters that filter the portions of audio source 140. Audio source 140a and 140b, as shown in Figure 4, represent the audio that is played back by one or more speakers 160 to reduce or eliminate crosstalk from the portion of the audio signals $Z_1$, $Z_2$, $Z_3$, and $Z_4$ that arrive at the left and right ears of the listener 202. As shown in Figure 4, filters $H_{1,1}$ and $H_{1,2}$ filter portions of audio source 140a and filters $H_{2,1}$ and $H_{2,2}$ filter portions of audio source 140b so that when the audio source 140 is output in an environment that affects played back signals according to $C_{1,1}$, $C_{1,2}$, $C_{2,1}$, and $C_{2,2}$, crosstalk is reduced or eliminated.

$V_1$ and $V_2$ represent respective filtered portions of the audio source 140a that are filtered by filters $H_{1,1}$ and $H_{1,2}$, and output to one or more speakers 160, respectively. $V_3$ and $V_4$ represent respective filtered portions of the audio source 140b that are filtered by filters $H_{2,1}$ and $H_{2,2}$, and output to one or more speakers 160, respectively. Therefore, when environment alters the signals output by the filters and played back by one or more speakers 160 according to $C_{1,1}$, $C_{1,2}$, $C_{2,1}$, and $C_{2,2}$, the signals reaching the ears of the listener 202 have reduced or eliminated crosstalk. As shown in Figure 4, $H_{1,1}$ and $H_{1,2}$ filter audio source 140a to produce $V_1$ and $V_2$ that are played back by one or more speakers 160 so that, when subjected to the effects of the environment by $C_{1,1}$ and $C_{2,1}$, resultant signals $Z_1$ and $Z_3$ arriving at the left ear of the listener 202 correspond only to audio source 140a, the left channel of the audio source 140. Similarly, $H_{2,1}$ and $H_{2,2}$ filter audio source 140b to produce $V_3$ and $V_4$ that are played back by one or more speakers 160 so that, when subjected to the effects of the environment by $C_{1,2}$ and $C_{2,2}$, resultant signals $Z_2$ and $Z_4$ arriving at the right ear of the listener 202 correspond only to audio source 140b, the right channel.

To determine the correct filters $H_{1,1}$, $H_{1,2}$, $H_{2,1}$, and $H_{2,2}$, the crosstalk cancellation application 120 can use the weighted sums of $C_{mxn}$, as described in Figure 3, to solve for $H_{mxn}$ based on equation 4 below:

$$CH = B \qquad\qquad\qquad \text{Equation 4}$$

Where C is the transfer functions determined in Figure 3 and,

$$B = I \qquad\qquad\qquad \text{Equation 5}$$

Where I is an identity matrix. To avoid direct inversion of an ill-conditioned system, the crosstalk cancellation application 120 can use any technically feasible technique to obtain the desired behaviors of the filters $H_{mxn}$, such as pseudo-inverse, regularized inverse, frequency-dependent regularization, least means square (LMS) filter design with an arbitrary penalty function, or similar techniques. The result is filters $H_{1,1}$, $H_{1,2}$, $H_{2,1}$, and $H_{2,2}$, which can be used by audio source 140a and 140b to appropriately filter audio to reduce or eliminate crosstalk arriving at the respective ear of the listener 202.

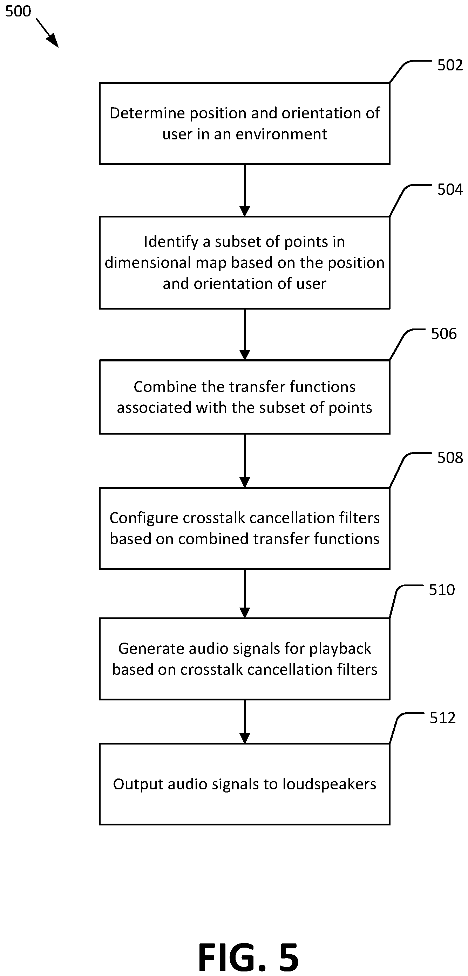

Figure 5 illustrates a flow chart of method steps for combining transfer functions used to configure filters that perform crosstalk cancellation according to one or more embodiments. Although the method steps are described with reference to the embodiments of Figures 1-4, persons skilled in the art will understand that any system configured to implement the method steps, in any order, falls within the scope of the present disclosure.

Method 500 begins at step 502, where crosstalk cancellation application 120 determines a position and an orientation of the listener 202 within an environment. The environment includes a space in which audio is played back by one or more speakers 160, such as the interior of a vehicle or any other interior or exterior environment. Crosstalk cancellation application 120 determines the position and orientation of the listener 202 based upon sensor data obtained from sensors 150 associated with an audio processing system 100. As noted above, the sensors 150 include optical sensors, pressure sensors, proximity sensors, and other sensors that obtain information about the environment and the position and orientation of the listener 202 within the environment. The position of the listener 202 is determined relative to a reference position within the environment based upon sensor data from the sensors 150. The orientation of the listener 202 is also determined relative to a reference orientation within the environment. In some embodiments, crosstalk cancellation application 120 determines the position and orientation of the head and/or ears of the listener 202 based upon the sensor data.

At step 504, crosstalk cancellation application 120 identifies a subset of points within a dimensional map 300 based on the position and/or orientation of the listener 202 within the environment. In one example, a given position and orientation of the listener 202 is characterized by coordinates in six-dimensional space. The crosstalk cancellation application 120 identifies a subset of points within the dimensional map 300 because the position and/or orientation of the listener 202 does not directly match with a particular point in the dimensional map 300. For example, the dimensional map 300 can include a very large number (e.g., hundreds, thousands, , etc.) of points in six dimensions (e.g., three dimensions for position and three dimensions for orientation), where each point is associated with a transfer function 132. In some embodiments, a simplified approach to identifying a point based on the position and orientation of the listener 202 includes reducing the number of dimensions of a position and orientation of the listener that are considered when identifying a point associated with the listener 202 in the dimensional map 300. To reduce mathematical complexity, a reduced set of parameters representing the position and orientation of the listener can be considered. For example, one or more of the parameters representing orientation can be removed and a nearest set of points are identified based on the mathematical distance from coordinates characterizing the position and orientation of the listener to one or more of the points from the set of points in the dimensional map 300. Examples of coordinates that can be removed include yaw, pitch, and/or roll angles. As another example, an alternative simplified approach to identifying transfer functions 132 includes reducing dimensionality of the dimensional map 300. As noted above, the dimensional map 300 includes the nearest subset of points in three-dimensional space representing the position of the user without regard to the orientation. In any of the above scenarios, the crosstalk cancellation application 120 identifies a nearest subset of points within the dimensional map 300 that is closest to the point characterizing at least some parameters corresponding to the position and orientation of the listener 202.

In some embodiments, the subset of nearest points can include four to six points or a set the points in the dimensional map 300 that are nearest the position and/or orientation of the listener. For example, the nearest four points in dimensional map 300 to the position of listener 302 are points A, B, C, and D. The crosstalk cancellation application 120 identifies the subset of points that are nearest to the position and/or orientation of the listener by determining the position and/or orientation of the listener falls within one of the previously calculated and stored polygons. For example, the position of listener 302 in Figure 3 is within the tetrahedron that is formed by points A, B, C, and D, thereby identifying points A, B, C, and D as the nearest subset of points to the position of listener 302. Because the position of the listener does not directly match a point associated with a single transfer function of transfer functions 132 in dimensional map 300, the crosstalk cancellation application 120 determines a weight 180 for each transfer function 132 associated with each respective point in the nearest subset of points.

At step 506, the crosstalk cancellation application 120 combines the transfer functions 132 associated with the subset of points. The weights 180 of each transfer function 132 are determined by the crosstalk cancellation application 120 based on a barycentric distance or Euclidean distance from the respective point in the nearest subset of points to the position of listener 302. For example, the weight 180 for each transfer function 132 associated with each point in the nearest subset of points can be equal to the inverse proportion of the distance to the position of the listener 302, normalized so that the sum of the weights of all the transfer functions 132 is 1.0. Therefore, the nearer the transfer function 132 is to the position of listener 302, the higher the weight 180 of the respective transfer function 132. The higher the weight 180, the more effect the respective transfer function 132 has on the operating characteristics (e.g., center frequency, gain, Q factor, cutoff frequencies, etc.) of the one or more filters 138. For example, in the three-dimensional case where there are four points A, B, C, and D, such as in Figure 3, the crosstalk cancellation application can determine a 2x2 matrix for transfer functions $C_{mxn}$, where m is the number of speakers 160 and n is the number of ears of the listener. Using equations 1, 2, and 3, the crosstalk cancellation application 120 calculates the weighted sum of the transfer functions $C_{11}$, $C_{12}$, $C_{21}$, and $C_{22}$ shown in Figure 2.

At step 508, The crosstalk cancellation application 120 configures the one or more filters 138 based on the combined transfer functions $C_{11}$, $C_{12}$, $C_{21}$, and $C_{22}$ determined in step 506. To determine the correct filters $H_{1,1}$, $H_{1,2}$, $H_{2,1}$, and $H_{2,2}$, the crosstalk cancellation application 120 can use the weighted sums of $C_{mxn}$ to solve for $H_{mxn}$ based on equations 4 and 5. The result is filters $H_{1,1}$, $H_{1,2}$, $H_{2,1}$, and $H_{2,2}$, which can be used by audio source 140a and 140b to appropriately filter audio to reduce or eliminate crosstalk arriving at the respective ear of the listener 202.

At step 510, crosstalk cancellation application 120 generates audio signals for playback based on the filters 138 configured with the identified combined transfer functions 132. The audio signals are generated based upon an audio source 140 that is being played back by audio processing system 100 within the environment, such as a song or other audio input provided to the audio processing system 100. The audio source 140 includes a left channel and a right channel. Crosstalk cancellation application 120 filters the audio source 140 using the filters 138 that are configured with the combined transfer functions 132 that were selected based upon nearest subset of points in the dimensional map 300 to the position and orientation of the listener 202. When played back in the environment, the filtered audio signals arrive at the left and right ear of the listener 202, respectively, with crosstalk being reduced or eliminated.

For example, Audio source 140a and 140b, as shown in Figure 4, represent the audio that is played back by one or more speakers 160 to reduce or eliminate crosstalk from the portion of the audio signals $Z_1$, $Z_2$, $Z_3$, and $Z_4$ that arrive at the left and right ears of the listener 202. The newly determined filters $H_{1,1}$ and $H_{1,2}$ filter portions of audio source 140a and newly determined filters $H_{2,1}$ and $H_{2,2}$ filter portions of audio source 140b so that when the audio source 140 is output in an environment that affects played back signals according to $C_{1,1}$, $C_{1,2}$, $C_{2,1}$, and $C_{2,2}$, crosstalk is reduced or eliminated.

Therefore, when environment alters the signals output by the filters $H_{1,1}$, $H_{1,2}$, $H_{2,1}$, and $H_{2,2}$, and played back by one or more speakers 160 according to $C_{1,1}$, $C_{1,2}$, $C_{2,1}$, and $C_{2,2}$, the signals reaching the ears of the listener 202 have reduced or eliminated crosstalk. For example, as shown in Figure 4, $H_{1,1}$ and $H_{1,2}$ filter audio source 140a to produce $V_1$ and $V_2$ that are played back by one or more speakers 160 so that, when subjected to the effects of the environment by $C_{1,1}$ and $C_{2,1}$, resultant signals $Z_1$ and $Z_3$ arriving at the left ear of the listener 202 correspond only to audio source 140a, the left channel of the audio source 140. Similarly, $H_{2,1}$ and $H_{2,2}$ filter audio source 140b to produce $V_3$ and $V_4$ that are played back by one or more speakers 160 so that, when subjected to the effects of the environment by $C_{1,2}$ and $C_{2,2}$, resultant signals $Z_2$

and $Z_4$ arriving at the right ear of the listener 202 correspond only to audio source 140b, the right channel.

At step 512, crosstalk cancellation application 120 outputs the filtered audio signals to one or more speakers 160 associated with audio processing system 100. One or more speakers 160 play back the filtered audio signals in the environment based on the filtered audio signals. The one or more speakers 160 include one or more speakers corresponding to a left channel of the audio processing system 100 and one or more speakers corresponding to a right channel of the audio processing system 100.

In sum, a crosstalk cancellation application configures a set of filters that are utilized to perform crosstalk cancellation between the left and right channels of an audio source that is played back by one or more speakers. The crosstalk cancellation application configures the set of filters by selecting transfer functions utilized for each of the filters in the set of filters. The transfer functions are selected by identifying the position and orientation of the user's head within a three-dimensional space using sensor data from one or more sensors. A dimensional map specifies a set of points that are respectively associated with transfer functions that are used to configure the filters. A subset of the set of points in the dimensional map are identified that are closest to the position and orientation of the head of the user. A weight for each transfer functions associated with the subset of points is interpolated based on the barycentric distance to the position and orientation of the head of the user in the dimensional map. The filters, utilizing the weighted transfer functions, filter one or more signals corresponding to an audio source that are used to drive one or more speakers to create a sound field. The one or more speakers play back respective filtered signals. When altered by the environment, the filtered signals, once reaching the ears of a listener, have reduced or eliminated crosstalk

At least one technical advantage of the disclosed techniques relative to the prior art is that, with the disclosed techniques, an audio processing system create improved crosstalk cancellation filters for a user with six-degrees of freedom in real-time by interpolating from a subset of filters By interpolating from a subset of filters, spectral distortions caused by user movements are reduced without the typical computational cost associated with covering all six-degrees of freedom movement. Additionally, the audio intended to be received by the user's left ear and right ear, respectively, more accurately represents the audio input that the audio processing and playback system outputs. These technical advantages provide one or more technological advancements over prior art approaches.

1. In some embodiments, a computer-implemented method comprises determining a position and an orientation of a user in an environment; determining, based on the position and the orientation of the user, a subset of nearest points in a dimensional map, wherein the dimensional map includes a set of points in a multi-dimensional space, each point is associated with a corresponding transfer function, and points in the subset of nearest points are closer to the position and the orientation of the user in the dimensional map than other points in the dimensional map; determining, based on the distance between each point in the subset of nearest points to the position and the orientation of the user in the dimensional map, a respective weight for each transfer function associated with the subset of nearest points; determining at least one crosstalk cancellation filter by combining each of the transfer functions associated with the subset of nearest points based on the respective weights; generating a plurality of audio signals for a plurality of loudspeakers based on the at least one crosstalk cancelation filter; and transmitting the plurality of audio signals to the plurality of loudspeakers for output.

2. The computer-implemented method of clause 1, wherein determining the position and orientation of the user in the environment comprises receiving sensor data from a plurality of sensors.

3. The computer-implemented method of clause 1 or 2, wherein determining the position and orientation of the user in the environment comprises calculating three coordinates corresponding to a position relative to a reference position and three coordinates corresponding to an orientation relative to a reference orientation.

4. The computer-implemented method of clause 3, wherein the three coordinates corresponding to the orientation relative to the reference orientation correspond to a roll angle, a pitch angle, and a yaw angle.

5. The computer-implemented method of any of clauses 1-4, wherein the subset of nearest points are closer to the position and the orientation of the user in the dimensional map than of the other points in the dimensional map based on: generating a non-overlapping polygonal space for each subset of points in the dimensional map, wherein each vertex of each non-overlapping polygonal space is a different point included in the associated subset of points, and wherein a circumscribed hypersphere of each non-overlapping polygonal space contains only points within the associated subset of points; and determining that the position and orientation of the user is within a non-overlapping polygonal space associated with subset of nearest points.

6. The computer-implemented method of any of clauses 1-5, wherein the non-overlapping polygonal space for each subset of points in the dimensional map are generated based on Delaunay triangulation.

7. The computer-implemented method of any of clauses 1-6, wherein determining the respective weight for each transfer function further comprises: determining the weight for each transfer function based on a mathematical distance from the position and the orientation of the user to each point in the subset of nearest points within the dimensional map.

8. The computer-implemented method of clause 7, wherein the mathematical distance is calculated based on a barycentric distance or a Euclidean distance.

9. The computer-implemented method of any of clauses 1-8, wherein the respective weight for each transfer function is inversely proportional to a normalized distance to the position and orientation of the user, wherein a sum of the respective weights equals 1.

10. The computer-implemented method of any of clauses 1-9, wherein the dimensional map is selected from a plurality of dimensional maps, wherein the dimensional map is selected based on a yaw angle relative to a reference orientation that corresponds to the first orientation.

11. The computer-implemented method of clause 10, wherein each of the plurality of dimensional maps is associated with a range of yaw angles relative to the reference orientation.

12. The computer-implemented method of any of clauses 1-11, wherein the plurality of audio signals comprises a left channel signal and a right channel signal.

13. In some embodiments, one or more non-transitory computer-readable media storing instructions that, when executed by one or more processors, cause the one or more processors to perform the steps of: determining a position and an orientation of a user in an environment; determining, based on the position and the orientation of the user, a subset of nearest points in a dimensional map, wherein the dimensional map includes a set of points in a multi-dimensional space, each point is associated with a corresponding transfer function, and points in the subset of nearest points are closer to the position and the orientation of the user in the dimensional map than other points in the dimensional map; determining, based on the distance between each point in the subset of nearest points to the position and the orientation of the user in the dimensional map, a respective weight for each transfer function associated with the nearest subset of points; determining at least one crosstalk cancellation filter by combining each of the transfer functions associated with the subset of nearest points based on the respective weights; generating a plurality of audio signals for a plurality of loudspeakers based on the at least one crosstalk cancelation filter; and transmitting the plurality of audio signals to the plurality of loudspeakers for output.

14. The one or more non-transitory computer-readable media of clause 13, wherein each of the subset of nearest points is closer to the position and the orientation of the user in the dimensional map than of the other points in the dimensional map based on: generating a non-overlapping polygonal space for each subset of points in the dimensional map, wherein each vertex of each non-overlapping polygonal space is a different point included in the associated subset of points, and wherein a circumscribed hypersphere of each non-overlapping polygonal space contains only points within the associated subset of points; and determining that the position and orientation of the user is within a non-overlapping polygonal space associated with subset of nearest points.

15. The one or more non-transitory computer-readable media of clauses 13 or 14, wherein the step of determining the respective weight for each transfer function further comprises: determining the weight for each transfer function based on a mathematical distance from the position and the orientation of the user to each point in the subset of nearest points within the dimensional map.

16. The one or more non-transitory computer-readable media of any of clauses 13-15, wherein the step of determining the position and orientation of the user in the environment further comprises: calculating three coordinates corresponding to a position relative to a reference position and three coordinates corresponding to an orientation relative to a reference orientation.

17. The one or more non-transitory computer-readable media of any of clauses 13-16, wherein the respective weight for each transfer function is inversely proportional to a normalized distance to the position and orientation of the user, wherein a sum of the respective weights equals 1.

18. The one or more non-transitory computer-readable media of any of clauses 13-17, wherein the dimensional map includes three-dimensions representing position in three-dimensional space and includes orientation as a range of yaw angles.

19. The one or more non-transitory computer-readable media of any of clauses 13-18, wherein the dimensional map includes three-dimensions representing position in three-dimensional space and includes two-dimensions representing orientation in two-dimensional space.

20. In some embodiments, a system comprises: at least one sensor configured to obtain information about a user in an environment; at least one speaker configured to play back audio within the environment; a memory storing crosstalk cancellation application; and a processor coupled to the memory that executes the crosstalk cancellation application by performing the steps of: determining a position and an orientation of a user in an environment; determining, based on the position and the orientation of the user, a subset of nearest points in a dimensional map, wherein the dimensional map includes a set of points in a multi-dimensional space, each point is associated with a corresponding transfer function, and points in the subset of nearest points are closer to the position and the orientation of the user in the dimensional map than other points in the dimensional map; determining, based on the distance between each point in the subset of nearest points to the position and the orientation of the user in the dimensional map, a respective weight for each transfer function associated with the subset of nearest points; determining at least one crosstalk cancellation filter by combining each of the transfer functions associated with the subset of nearest points based on the respective weights; generating a plurality of audio signals for a plurality of loudspeakers based on the at least one crosstalk cancelation filter; and transmitting the plurality of audio signals to the plurality of loudspeakers for output.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1.  A computer-implemented method, comprising:

    determining a position and an orientation of a user in an environment;
    determining, based on the position and the orientation of the user, a subset of nearest points in a dimensional map, wherein the dimensional map includes a set of points in a multi-dimensional space, each point is associated with a corresponding transfer function, and points in the subset of nearest points are closer to the position and the orientation of the user in the dimensional map than other points in the dimensional map;
    determining, based on a distance between each point in the subset of nearest points to the position and the orientation of the user in the dimensional map, a respective weight for each transfer function associated with the subset of nearest points;
    determining at least one crosstalk cancellation filter by combining each of the transfer functions associated with the subset of nearest points based on the respective weights;
    generating a plurality of audio signals for a plurality of loudspeakers based on the at least one crosstalk cancelation filter; and
    transmitting the plurality of audio signals to the plurality of loudspeakers for output.

2.  The computer-implemented method of claim 1, wherein determining the position and orientation of the user in the environment comprises receiving sensor data from a plurality of sensors.

3.  The computer-implemented method of claim 1 or 2, wherein determining the position and orientation of the user in the environment comprises calculating three coordinates corresponding to a position relative to a reference position and three coordinates corresponding to an orientation relative to a reference orientation.

4.  The computer-implemented method of claim 3, wherein the three coordinates corresponding to the orientation relative to the reference orientation correspond to a roll angle, a pitch angle, and a yaw angle.

5.  The computer-implemented method of any one of claims 1 to 4, wherein the subset of nearest points are closer to the position and the orientation of the user in the dimensional map than of the other points in the dimensional map based on:

    generating a non-overlapping polygonal space for each subset of points in the dimensional map, wherein each vertex of each non-overlapping polygonal space is a different point included in the associated subset of points, and wherein a circumscribed hypersphere of each non-overlapping polygonal space contains only points within the associated subset of points; and
    determining that the position and orientation of the user is within a non-overlapping polygonal space associated with subset of nearest points.

6.  The computer-implemented method of claim 5, wherein the non-overlapping polygonal space for each subset of points in the dimensional map are generated based on Delaunay triangulation.

7.  The computer-implemented method of any one of claims 1 to 6, wherein determining the respective weight for each transfer function further comprises:
    determining the weight for each transfer function based on a mathematical distance from the position and the orientation of the user to each point in the subset of nearest points within the dimensional map.

8.  The computer-implemented method of claim 7, wherein the mathematical distance is calculated based on a barycentric distance or a Euclidean distance.

9. The computer-implemented method of any one of claims 1 to 8, wherein the respective weight for each transfer function is inversely proportional to a normalized distance to the position and orientation of the user, wherein a sum of the respective weights equals 1.

10. The computer-implemented method of any one of claims 1 to 9, wherein the dimensional map is selected from a plurality of dimensional maps, wherein the dimensional map is selected based on a yaw angle relative to a reference orientation that corresponds to a first orientation.

11. The computer-implemented method of claim 10, wherein each of the plurality of dimensional maps is associated with a range of yaw angles relative to the reference orientation.

12. The computer-implemented method of any one of claims 1 to 11, wherein the dimensional map includes three-dimensions representing position in three-dimensional space and includes two-dimensions representing orientation in two-dimensional space.

13. The computer-implemented method of any one of claims 1 to 12, wherein the plurality of audio signals comprises a left channel signal and a right channel signal.

14. One or more non-transitory computer-readable media storing instructions that, when executed by one or more processors, cause the one or more processors to perform the method of any one of claims 1 to 13.

15. A system comprising:

at least one sensor configured to obtain information about a user in an environment;
at least one speaker configured to play back audio within the environment;
a memory storing a crosstalk cancellation application; and
a processor coupled to the memory that executes the crosstalk cancellation application by performing the method of any one of claims 1 to 13.

100

| Audio Source 140 | Sensor(s) 150 | Speaker(s) 160 |

Processing Unit 112

Memory 114

Weights 180

Transfer Function(s) 132

Crosstalk Cancelation Application 120

Dimensional Map 134

Filter(s) 138

Computing Device 110

# FIG. 1

140a
140b

C1,1    C1,2    C2,1    C2,2

S2
S3
S1
S4

L    202    R

**FIG. 2**

300

**FIG. 3**

# FIG. 4

500

502

Determine position and orientation of
user in an environment

504

Identify a subset of points in
dimensional map based on the position
and orientation of user

506

Combine the transfer functions
associated with the subset of points

508

Configure crosstalk cancellation filters
based on combined transfer functions

510

Generate audio signals for playback
based on crosstalk cancellation filters

512

Output audio signals to loudspeakers

# FIG. 5

| | Europäisches Patentamt<br>European Patent Office<br>Office européen des brevets | **EUROPEAN SEARCH REPORT** | **Application Number**<br>EP 25 15 0067 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2013 110633 A (NIPPON TELEGRAPH & TELEPHONE; UNIV TOHOKU) 6 June 2013 (2013-06-06) * paragraph [0019] - paragraph [0030]; figures 1-2 * | 1-15 | INV. H04S7/00<br><br>ADD. G06F3/0346 G06T17/20 |
| Y | US 6 243 476 B1 (GARDNER WILLIAM G [US]) 5 June 2001 (2001-06-05) * column 10, line 21 - line 52; figure 4 * * column 12, line 43 - line 61 * | 1-15 | |
| A | US 2007/269061 A1 (KIM YOUNG-TAE [KR] ET AL) 22 November 2007 (2007-11-22) * paragraph [0085] - paragraph [0102]; figures 8-10 * | 1-15 | |
| Y | Hannes Gamper: "Enabling technologies for audio augmented reality systems", PhD Thesis, 2 May 2014 (2014-05-02), XP055698410, Retrieved from the Internet: URL:https://core.ac.uk/download/pdf/8071175 9.pdf [retrieved on 2020-05-26] * Section 5.2; page 82 - page 87 * | 5,6 | **TECHNICAL FIELDS SEARCHED (IPC)**<br><br>H04S G06T G06F |
| Y | US 2019/075418 A1 (SHI GUANGJI [US] ET AL) 7 March 2019 (2019-03-07) * paragraph [0074] - paragraph [0075] * | 4 | |

The present search report has been drawn up for all claims

| Place of search | Date of completion of the search | Examiner |
|---|---|---|
| Munich | 2 May 2025 | Guillaume, Mathieu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 25 15 0067

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | Publication date |
|---|---|---|---|
| JP 2013110633 A | 06-06-2013 | JP 5754595 B2 | 29-07-2015 |
| | | JP 2013110633 A | 06-06-2013 |
| US 6243476 B1 | 05-06-2001 | NONE | |
| US 2007269061 A1 | 22-11-2007 | KR 100718160 B1 | 14-05-2007 |
| | | US 2007269061 A1 | 22-11-2007 |
| US 2019075418 A1 | 07-03-2019 | CN 111615834 A | 01-09-2020 |
| | | EP 3677054 A1 | 08-07-2020 |
| | | JP 2020532914 A | 12-11-2020 |
| | | KR 20200063151 A | 04-06-2020 |
| | | US 2019075418 A1 | 07-03-2019 |
| | | US 2020322747 A1 | 08-10-2020 |
| | | WO 2019046706 A1 | 07-03-2019 |

EPO FORM P0459

For more details about this annex : see Official Journal of the European Patent Office, No. 12/82